(19) **Europäisches Patentamt**
**European Patent Office**
**Office européen des brevets**

(11) Veröffentlichungsnummer: **0 330 663**
**B1**

(12) **EUROPÄISCHE PATENTSCHRIFT**

(45) Veröffentlichungstag der Patentschrift: **13.06.90**

(51) Int. Cl.⁵: **B 60 S 1/34, B 60 S 1/36**

(21) Anmeldenummer: **87907094.4**

(22) Anmeldetag: **05.11.87**

(86) Internationale Anmeldenummer:
**PCT/DE87/00497**

(87) Internationale Veröffentlichungsnummer:
**WO 88/03486 19.05.88 Gazette 88/11**

(54) **PENDEL-WISCHVORRICHTUNG FÜR SCHEIBEN VON KRAFTFAHRZEUGEN.**

(30) Priorität: **08.11.86 DE 3638159**

(43) Veröffentlichungstag der Anmeldung:
**06.09.89 Patentblatt 89/36**

(45) Bekanntmachung des Hinweises auf die
Patenterteilung:
**13.06.90 Patentblatt 90/24**

(84) Benannte Vertragsstaaten:
**BE DE FR IT**

(56) Entgegenhaltungen:
**DE-A-3 409 256**
**DE-A-3 614 166**
**DE-B-1 005 391**
**US-A-3 019 469**

**Patents Abstracts of Japan, Band 8, Nr. 143**
**(M-306)(1580) 4. Juli 1984 & JP,A,5940968**
**(NISSAN JIDOSHA K.K.) 6. März 1984**

(73) Patentinhaber: **ROBERT BOSCH GMBH**
**Postfach 50**
**D-7000 Stuttgart 1 (DE)**

(72) Erfinder: **KÜHBAUCH, Gerd**
**Butzengrabenweg 6**
**D-7582 Bühlertal (DE)**
Erfinder: **SCHALLER, Gotthilf**
**Adolf-Kolping-Weg 12**
**D-7250 Leonberg 1 (DE)**

Courier Press, Leamington Spa, England.

## Beschreibung

### Stand der Technik

Die Erfindung geht aus von einer Pendel-Wischvorrichtung nach der Gattung des Hauptanspruchs. Es ist schon eine Pendelwischvorrichtung bekannt (DE-B-10 05 391), bei der die Gegenelemente zur Übertragung der Drehbewegung auf den äußeren Teilarm als ein direkt an diesem befestigter Querzapfen ausgebildet sind, welcher in einem kulissenartigen Längsschlitz des inneren Teilarms geführt ist. Die Drehbewegung des äußeren Teilarms ist somit abhängig von der Abweichung des Schlitzverlaufs von seiner hauptsächlichen Längsachse. Während des Betriebs dieser bekannten Wischvorrichtung nutzt sich die Führungskulisse rasch ab, weil der Längsschlitz in dem aus einem relativ dünnen Blech gefertigten und somit leichten, inneren Teilarm angeordnet ist. Diese Abnutzung wird noch dadurch beschleunigt, daß die Steuerelemente völlig ungeschützt dem Straßenstaub ausgesetzt sind, der sich an der notwendigerweise geschmierten Gleitführung zwischen den beiden Teilarmen absetzt und wie Schleifstaub wirkt. Das daraus resultierende Spiel führt bei jedem Wischerschlag zu unerwünschten Klappergeräuschen. bis hin zum Rattern des Wischblatts auf der Scheibe.

### Vorteile der Erfindung

Die erfindungsgemäße Pendel-Wischvorrichtung mit den kennzeichnenden Merkmalen des Hauptanspruchs hat demgegenüber den Vorteil, daß die gestellfest angeordneten Gegenelemente alleine auf die Belange der Steuerung des äußeren Teilarms abgestellt werden können. Die allgemeine Forderung nach einem relativ leichten Wischerarm, dessen zu beschleunigende und abzubremsende Masse gering zu halten ist, kann voll erfüllt werden. Weiter können die Gegenelemente staubgeschützt werden, so daß deren Verschleiß erheblich gemindert wird. Auch die Trennung der Steuerung des äußeren Teilarms von dessen Längsführung bietet Vorteile hinsichtlich der Betriebssicherheit der Pendel-Wischvorrichtung.

Durch die in den Unteransprüchen aufgeführten Maßnahmen sind vorteilhafte Weiterbildungen und Verbesserungen der im Hauptanspruch angegebenen Pendelwischvorrichtung möglich.

### Zeichnung

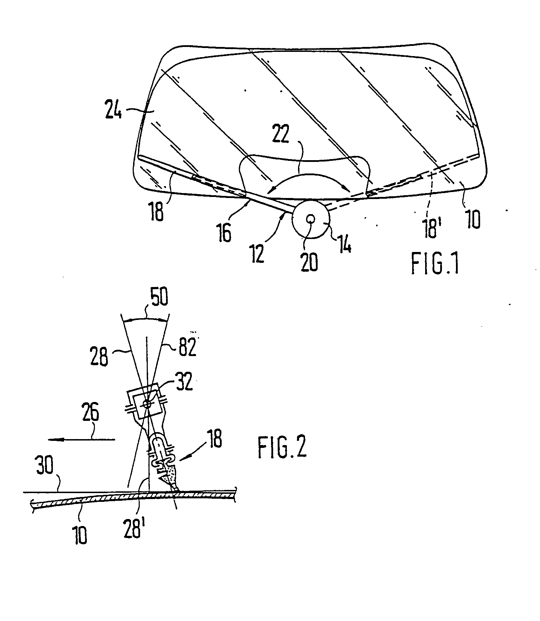

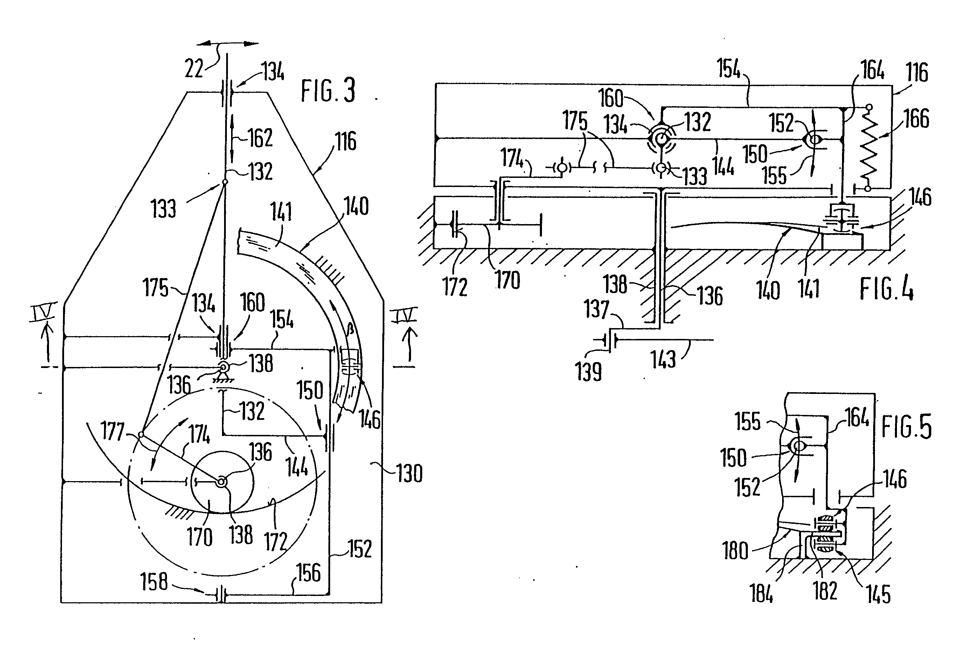

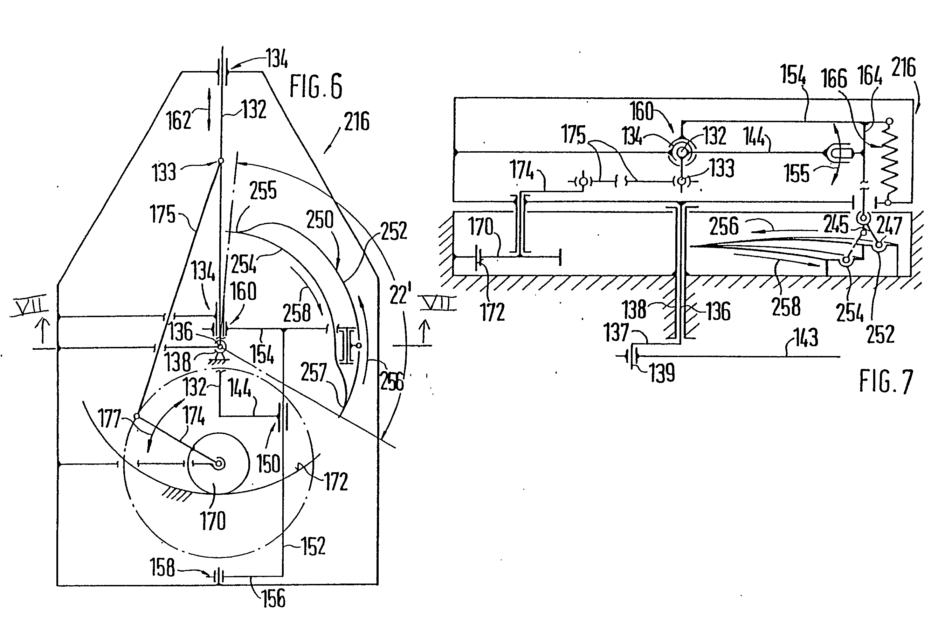

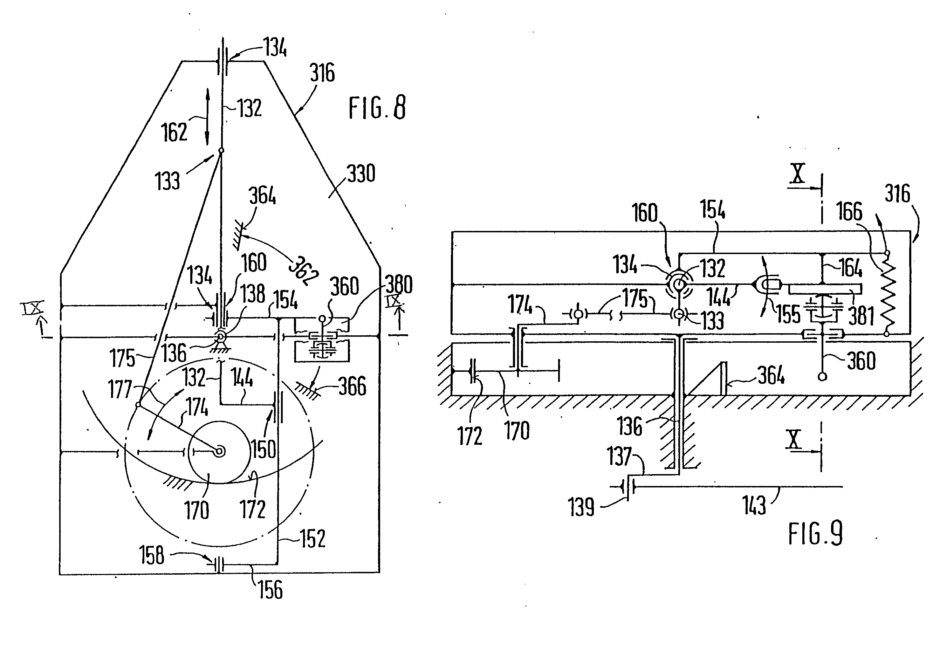

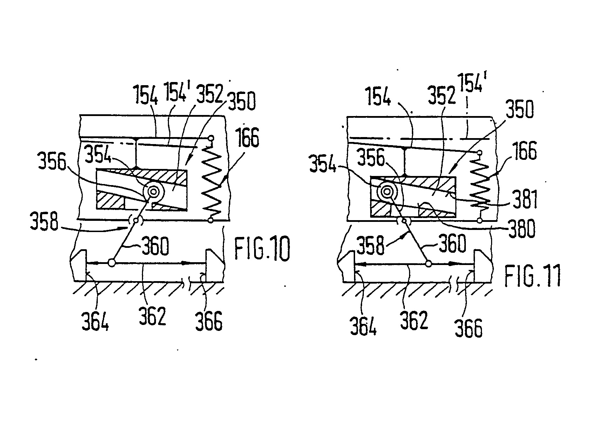

Ausführungsbeispiele der Erfindung sind in der Zeichnung dargestellt und in der nachfolgenden Beschreibung näher erläutert. Es zeigen Figur 1 eine Draufsicht auf die Windschutzscheibe eines Kraftfahrzeuges, mit einer dieser zugeordneten Wischvorrichtung, Figur 2 eine schematische Darstellung eines auf der Scheibe in Arbeitsposition angeordneten Wischblatts der erfindungsgemäßen Pendelwischvorrichtung, Figur 3 eine schematische Teildarstellung eines zur Pendelwischvorrichtung gehörenden Wischerarms, gemäß einer ersten Ausführung, Figur 4 einen Schnitt durch den Wischerarm gemäß Figur 3, entlang der Linie IV-IV, Figur 5 eine Teildarstellung des Schnitts gemäß Figur 4, entsprechend einer anderen Ausführungsform der Erfindung, Figur 6 eine schematische Teildarstellung eines anderen. gemäß der Erfindung ausgebildeten Wischerarms, Figur 7 einen Schnitt durch den Wischerarm gemäß Figur 6, entlang der Linie VII-VII, Figur 8 eine weitere Teildarstellung eines gemäß einer anderen Ausführung der Erfindung ausgebildeten Wischerarms, Figur 9 einen Schnitt durch den Wischerarm gemäß Figur 8, entlang der Linie IX-IX, Figur 10 einen Teilschnitt durch den Wischerarm gemäß Figur 9, der sich in einer ersten Betriebsstellung befindet und Figur 11 den Schnitt gemäß Figur 10, wobei der Wischerarm eine zweite Betriebsstellung einnimmt.

### Beschreibung der Ausführungsbeispiele

Einer in Figur 1 dargestellten Windschutzscheibe 10 ist eine Pendel-Wischvorrichtung 12 zugeordnet. Die Wischvorrichtung weist ein Übersetzungsgetriebe 14 auf, das einen Wischhebel 16 pendelnd antreibt. Dabei pendelt der Wischhebel 16 zusammen mit einem an seinem freien Ende befestigten Wischblatt 18 um eine zum Übersetzungsgetriebe 14 gehörende Pendelachse 20, entsprechend einem in Figur 1 dargestellten Doppelpfeil 22 zwischen zwei Umkehrlagen. Die eine Umkehrlage ist in Figur 1 durch ausgezogene Linienführung dargestellt, während die andere Umkehrlage gestrichelt gezeichnet und mit 18' bezeichnet ist. Während der Pendelbewegung 22 wird dem auf der zu wischenden Scheibe 10 aufliegenden Wischblatt eine zur Pendelachse 20 radial verlaufende Schiebebewegung mitgeteilt, so daß das von dem Wischblatt 18 bestrichene Wischfeld 24 eine von einem Kreissegment abweichende Form hat. Derart arbeitende Wischvorrichtungen werden neuerdings dort verwendet, wo ein einziger Scheibenwischer ein möglichst großes Wischfeld auf der zu wischenden Scheibe überstreichen soll. Insbesondere sollen auch weit von der Pendelachse 20 entfernte Scheiben-Eckbereiche überstrichen werden. Unabhängig davon ist es jedoch denkbar, derartig arbeitende Wischvorrichtungen auch dann einzusetzen, wenn einer Kraftfahrzeugscheibe mehrere, insbesondere zwei nebeneinander angeordnete Wischvorrichtung en zugeordnet sind. Dabei wird man die Getriebe dieser beiden Wischvorrichtungen so auslegen, daß jedes der zu ihr gehörenden Wischblätter ein als optimal anzusehendes, bis nahe an den Scheibenrand heranreichendes Wischfeld überstreicht. Die oben erläuterte Wischanlage wird üblicherweise als sogenannte Pendel-Hubwischanlage bezeichnet.

Figur 2 zeigt das Wischblatt 18 im Querschnitt, wobei es in Richtung des Pfeiles 26 über die zu wischende Scheibe 10 verschoben wird. Weiter ist in Figur 2 die in der Beschreibungseinleitung behandelte, in Längsrichtung des Wischblatts gelegte Ebene 28 eingezeichnet. Mit 28' wird die Lage der Ebene bezeichnet wie sie aus dem Stand der Technik bekannt ist. Sie steht nämlich senkrecht auf einer Tangente 30, welche die gekrümmte Scheibe 10 in deren Mittelbereich und dort berührt, wo die Senkrechte 28' auf die Scheibe 10 auftrifft. Das heißt die Senkrechte 28' schließt mit der Tangente 30 einen rechten Winkel ein.

Das Grundprinzip der Erfindung sei anhand der Figur 3 erläutert. Es ist dort ein Wischerarm 116 ausschnittsweise und vergrößert dargestellt. En weist einen inneren Teilarm 130 auf, an dem ein äußerer Teilarm 132 in Lagerbuchsen 134 des inneren Teilarms 130 um seine Längsachse drehbar gelagert ist. Weiter ist an dem inneren Teilarm 130 eine Pendelwelle 136 befestigt, die in einer gestellfesten Lagerbuchse 138 geführt ist. Der gesamte Wischerarm 116 vermag somit in der Pendellagerung 136, 138 in Richtung des Doppelpfeiles 22 zu schwingen. Im Bereich des inneren Teilarmes 130 ist an der Fahrzeugkarosserie eine gestellfeste Bahn 140 angeordnet, die sich konzentrisch um die Pendel-Lagerstelle 136, 138 des Wischerarms 116 erstreckt. Wenn der Wischerarm nun in Richtung des Doppelpfeiles 22 um die Pendelachse 20 der Pendellagerung 136, 138 pendelt, kann man auch davon reden, daß die Längsachse des äußeren Teilarms 132 in einer Ebene pendelt, welche zur Pendelachse 20 rechtwinklig steht. Die Bahn 140 befindet sich tatsächlich in einer Ebene, welche unterhalb der Zeichnungsebene liegt. Sie ist somit eigentlich durch den inneren Teilarm 30 verdeckt. Ihre dem Teilarm 130 zugewandte Bahnfläche 141 ist zur Pendelebene geneigt.

Mit dem äußeren Teilarm 132 ist ein Schwenk- oder Querarm 144 verbunden, an dessen freien Ende eine Gleitbuchse 150 befestigt ist. In der Gleitbuchse 150 ist eine Säule 152 geführt, deren beide Enden mit Schwingarmen 154, 156 fest verbunden sind. Die Schwingarme 154, 156 sind mit ihren von der Säule 152 abgewandten Enden an dem inneren Teilarm 130 derart gelagert, daß sie um eine Achse geschwenkt werden können, welche parallel zur Längsachse des äußeren Teilarms 132 verläuft. Die Lagerstelle des Schwingarmes 156 ist mit 158 bezeichnet, während die andere Lagerstelle für den Schwingarm 154 mit 160 bezeichnet worden ist. Wie die Figur 4 weiter zeigt, ist der äußere Teilarm 132 in Richtung des Doppelpfeiles 162 in den Lagerungen 134 verschiebbar und darüber hinaus noch, genau wie der äußere Teilarm 32 in Figur 3, um seine Längsachse drehbar. An dem Schwingarm 154 ist über eine Stütze 164 eine Rolle 146 verbunden. Weiter greift an dem Schwingarm 154 eine vorgespannte Zugfeder 166 an (Figur 5), die dafür sorgt, daß die Rolle 146 vorschriftsmäßig und kraftschlüssig an die Oberfläche 141 der Bahn 140 angelegt ist. Auf diese Weise werden die Steuerelemente (Rolle 146) mit den Gegenelementen (Bahn 140, 141) in Wirkverbindung gehalten. Weiter ist an dem inneren Teilarm 130 ein Ritzel 170 gelagert, daß mit einer gestellfesten Innenverzahnung 172 kämmt. Die Innenverzahnung 172 umgibt die Pendellagerung 136, 138 konzentrisch über einen bestimmten Winkel, der größer als der Pendelwinkel des Wischblatts 18 ist. Mit dem Ritzel 170 ist eine Kurbel 174 fest verbunden, an deren freien Ende eine Schubstange 174 angelenkt ist, deren anderes Ende mit dem äußeren Teilarm 132 über ein Kugelgelenk 133 verbunden ist. Weiter zeigt Figur 5. daß die mit dem inneren Teilarm 130 fest verbundene Pendelachse 136 eine an ihr befestigte Schwinge 137 aufweist, an deren freien Ende ein Kurbelzapfen 139 befestigt ist. An dem Kurbelzapfen 139 ist eine Schubstange 143 gelagert, welche Teil eines Kurbelgetriebes ist, das eine Drehbewegung in eine Schwingbewegung umwandelt. Über die Schwinge 137 wird somit der Pendelachse 136 und dem mit dieser verbundenen inneren Teilarm 130 die Pendel-Wischbewegung (Doppelpfeil 22) mitgeteilt. Eine detaillierte Beschreibung der von dem weiteren Kurbeltrieb 170, 174, 175 erzeugte Hin- und Herbewegung (Doppelpfeil 162) des äußeren Teilarms 132 ist in unserer älteren Patentanmeldung (DE-A-36 14 166. 6) näher erläutert, auf die hier ausdrücklich Bezug genommen wird und deren Offenbarung somit zur Offenbarung der vorliegenden Patentanmeldung wird. Wenn der Wischerarm 116 um die pendelachse 20 schwingt, wälzt sich das Ritzel 170 an der Innenverzahnung 172 ab, die Kurbel 175 läuft in Richtung des Doppelpfeiles 177 um, so daß die Schubstange 175 eine Hubbewegung 162 auf den äußeren Teilarm 132 überträgt. Der äußere Teilarm 132 führt also zusammen mit dem Wischblatt 18 eine Pendelbewegung (Doppelpfeil 22) aus, der eine Hubbewegung (Doppelpfeil 162) überlagert ist. Auch bei dieser Ausführungsform führt der äußere Teilarm 132 eine Schwenk- oder Pendelbewegung (Doppelpfeil 50, Figur 2) um seine Längsachse aus, weil der Schwingarm 154 dem Verlauf der Oberfläche 141 der Bahn 140 folgend gegen die Kraft der Andrückfeder 166 gehoben oder gesenkt wird (Doppelpfeil 155). Mit dem Schwingarm 154 bewegt sich natürlich auch die Säule 152 und der Schwingarm 156. Diese Bewegung wird natürlich auch über die Lagerbuchse 150 auf den Querarm 144 und somit auf den äußeren Teilarm 132 und das Wischblatt 18 übertragen. Die Pendelwischvorrichtung ist also mit Steuermitteln 140, 141, 144, 146 versehen, welche eine von der Pendelbewegung (Doppelpfeil 22) abgeleitete Dreh- bzw. Schwingbewegung (Doppelpfeil 50) des äußeren Teilarms 132 um dessen Längsachse erzwingen. Dabei sind die Steuermittel so bestimmt und ausgelegt, daß sich in jeder momentanen Betriebsstellung der Wischvorrichtung das Wischblatt in einer optimalen Stellung zur Krümmung der Scheibe befindet.

Die Ausfürungsform gemäß Figur 5 entspricht der eben behandelten Ausführungsform gemäß den Figuren 3 und 4. Abweichend davon ist dort jedoch an der Stütze 164 mit Abstand von der Rollen 146 eine zweite Rolle 145 angeordnet. Die Bahn 180 ist bei diesem Ausführungsbeispiel durch ein Band 182 gebildet, das über eine Winkelstütze 184 gestellfest gehalten ist. Das Band 182 ist von der Rolle 145 untergriffen, während die Rolle 146 auf der anderen, der unteren Oberfläche gegenüberliegenden Oberfläche 141 aufliegt. Die beiden Rollen 145 und 146 sind somit formschlüssig an der Bahn 180 geführt. Eine Andrückfeder kann somit entfallen.

Bei den weiteren Ausführungsformen gemäß den Figuren 6, 7 und 8 bis 11 ist die Getriebeausgestaltung zur Erzeugung der Hubbewegung 162 mit der identisch, wie sie anhand der Figuren 3 und 4 beschrieben worden ist. Deshalb sind auch bei allen den genannten Figuren die zur Hubbewegung erforderlichen Bauelemente mit den gleichen Bezugszahlen bezeichnet worden, wie dies in den Figuren 3 und 4 geschehen ist. Dies gilt auch für die gelenkige Anordnung der Säulenführung 152 gemäß den Figuren 3 und 4, die auch bei den Ausführungen gemäß den Figuren 6 und 7 sowie 8 bis 11 verwirklicht worden ist.

Zur Erreichung der Schwing- oder Pendelbewegung 50 des äußeren Armteils 132 in Figur 6 ist an den Schwingarm 154 eine Stütze 164 befestigt, an deren freien Ende ein schwenkbarer Taster 245 mit seinem einen Ende angelenkt ist. Das andere Ende 247 des Tasters 245 ist in einer Schleife 250 geführt, die insbesondere aus Figur 7 ersichtlich ist. Die Schleife 250 bildet eine Bahn, die zur Pendelebene geneigt ist. Sie ist gestellfest angeordnet und liegt ebenso wie die Bahn 140 (Figur 3) dem inneren Teilarm 130 gegenüber. Die Schleife 250 weist zwei Teilbahnen 252 und 254 auf, die in ihren beiden Endbereichen nach Art einer Weiche zusammengeführt sind. Der Verlauf der beiden Teilbahnen 252 und 254 in bezug auf die erläuterte Pendelebene ist verschieden, was insbesondere die Figur 7 zeigt. Im Bereich der weichenartigen Zusammenführungen 255, 257 liegt die in Richtung der Pfeile 256, 258 vornliegende Teilbahn etwas höher als die andere Teilbahn, so daß der Taster im Bereich der Weichen 255 aus der etwas höher liegenden Teilbahn in die tiefer liegende Teilbahn rutscht und so zwangsgeführt nicht in derselben Teilbahn entgegen den Pfeilen 256, 258 zurückläuft, wenn der Wischerarm 216 aus der einen Pendelrichtung in die Gegenrichtung zurückschwingt. Auf diese Weise kann die Schwing- oder Drehbewegung 50 des äußeren Armteils 132 völlig unabhängig in jeder Phase der Pendelbewegung 22 den Erfordernissen angepaßt werden. Sowohl beim Hinlauf als auch beim Rücklauf des Wischblatts kann dieses zu jedem Teilbereich der Scheibenoberfläche optimal eingestellt werden. Die Schleife 250 bildet also zusammen mit dem Taster 245, 247 ein Steuermittel, welches über den Schwingarm 154, die Säule 152, das Gleitlager 150 und den Querarm 144 eine von der Pendelbewegung (Doppelpfeil 22) abgeleitete Drehbewegung 50 des äußeren Teilarms 132 um dessen Längsachse erzwingt. Die Größe der Pendelbewegung des Tasters 245, 247 ist in Figur 6 durch das Bezugszeichen 22' ausgedrückt.

Bei der Ausführungsform gemäß den Figuren 8 bis 11 sind die Steuermittel durch eine Kulisse 350 gebildet, welche einen zur Pendelebene geneigten Kanal 352 aufweist. In dem Kanal 352 ist eine Steuerrolle 354 geführt, die an dem einen Hebelarm 356 eines zweiarmigen Hebels 358 drehbar angeordnet ist. Der andere Hebelarm 360 des zweiarmigen Hebels 358 ragt in einen Bereich 362 in welchem er mit gestellfesten Anschlägen 364, 366 zusammenwirkt. Die Kulisse 350 ist mit dem Schwingarm 154 fest verbunden. Wenn der Wischerarm 316 in Richtung des Doppelpfeiles 22 pendelt, schlagen nahe in den sogenannten Pendelumkehrstellungen die Anschläge 364 bzw. 366 an dem in den Bereich 362 ragenden Hebelarm 360 des zweiarmigen Hebels 358 an, so daß dieser aus seiner einen Betriebsstellung (Figur 10) in seine andere Betriebsstellung (Figur II) geschwenkt wird bzw. bei Gegenbewegung aus der Stellung gemäß Figur 12 in die in Figur 11 gezeigte Stellung gebracht wird. Bei diesen Bewegungen des zweiarmigen Hebels 358 wird über den zur Pendelebene geneigten Kanal 352 bzw. über die in dem Kanal befindliche Rolle 354 die Kulisse 350 und mit dieser der Schwingarm 154 aus seiner einen Betriebslage in seine andere Betriebslage gebracht. Die beiden Betriebslagen sind aus den Figuren 11 und 12 ersichtlich. Die momentane Betriebslage des Schwingarmes 154 ist dabei ausgezogen gezeichnet, während die andere Betriebslage strichpunktiert dargestellt und mit 154' bezeichnet worden ist. Auch bei dieser Ausführungsform ist an dem Schwingarm 154 eine Zugfeder 166 angeordnet, die vorgespannt ist und dadurch für eine sichere Einhaltung der jeweiligen Betriebslage des zweiarmigen Hebels 258 bzw. des Schwingarmes 154 sorgt. Über die schon beschriebene Anordnung der Säule 152 und des an dieser geführten Querarmes 144, der seinerseits mit dem äußeren Teilarm 132 fest verbunden ist, wird eine Schwenkbewegung 50 des äußeren Teilarms 132 um seine Längsachse erreicht. Diese Bewegung wird natürlich auch auf das Wischblatt 18 übertragen. Es wird also beispielsweise aus der in Figur 2 dargestellten einen Betriebsstellung über einen Winkel 50 in eine durch eine Linie 82 symbolisierte andere Betriebsstellung gebracht. Die Umsteuerung des Wischblatts 18 aus seiner einen in seine andere Betriebslage erfolgt nahe den sogenannten Pendel-Umkehrstellungen, wo die Anschläge 364 bzw. 366 mit dem zweiarmigen Hebel 358 zusammenwirken. Erwähnt sei noch, daß zur besseren Übersichtlichkeit der Figuren 8 und 9 dort die Kulisse 350 lediglich durch die Andeutung einer Kanalwand 380 (Figur 8) und 381 (Figur 9) symbolisiert ist.

## Patentansprüche

1. Pendel-Wischvorrichtung für Scheiben von Kraftfahrzeugen, mit einem langgestreckten, mehrteiligen Wischerarm, dessen mit einem Pendellagerelement versehener innerer Teilarm (130) eine buchsenartige Führung (134) für einen stangenartigen äußeren, ein Wischblatt haltenden Teilarm bildet und diese Führung während des Betriebs der Wischvorrichtung eine Längsverschiebung des äußeren Teilarms (132) gegenüber dem inneren Teilarm (130) erlaubt, wobei Steuerelemente des äußeren Teilarms mit Gegenelementen (145, 146 bzw. 350) zusammenwirkend eine von der Pendelbewegung abgeleitete Drehbewegung des äußeren Teilarms (132) um dessen Längsachse erzwingen, dadurch gekennzeichnet, daß die Gegenelemente (140, 141) an einem am inneren Teilarm (130) befestigten, sich quer zu diesem erstreckenden Schwingarm (154) angeordnet sind, welcher fest mit einer quer zu ihrer Längserstreckung, in Bezug auf den inneren Teilarm (130) pendelbar gelagerten, zur Längsachse des äußeren Teilarms (132) achsparallel ausgerichteten und neben dieser angeordneten Führungssäule (152) verbunden ist und eine mit dem äußeren Teilarm (132) verbundene Führungsbuchse (150) an der Führungssäule verschiebbar ist.

2. Pendelwischvorrichtung nach Anspruch 1, dadurch gekennzeichnet, daß die gestellfesten Steuerelemente durch eine zur Pendelebene geneigte Bahn (140 bzw. 250 bzw. 352) gebildet sind, an der die mit dem äußeren Teilarm (132) wirkverbundenen Gegenelemente geführt sind.

3. Pendelwischvorrichtung nach Anspruch 2, dadurch gekennzeichnet, daß die Gegenelemente für die flächig ausgebildete Bahn (40 bzw. 140) als Rolle (146 bzw. 145) ausgebildet sind.

4. Pendelwischvorrichtung nach Anspruch 3, dadurch gekennzeichnet, daß die Bahn zwei mit Abstand voneinander verlaufende, voneinander abgewandte Oberflächen aufweist und daß an diesen als Gegenelement je eine mit dem Schwingarm (154) verbundene Rolle (145, 146) anliegt.

5. Pendelwischvorrichtung nach einem der Ansprüche 3 oder 4, dadurch gekennzeichnet, daß die Rolle (146) zur Bahn (140) federbelastet ist.

6. Pendelwischvorrichtung nach einem der Ansprüche 2 oder 3, dadurch gekennzeichnet, daß die Bahn eine aus zwei Teilbahnen (352, 254) bestehende Schleife (250) ist, wobei die beiden Teilbahnen in ihren beiden Endbereichen nach der Art einer Weiche (255, 257) zusammengeführt sind.

7. Pendelwischvorrichtung nach Anspruch 6, dadurch gekennzeichnet, daß die Neigung der einen Teilbahn (252 bzw. 254) zur Pendelebene anders ist als die Neigung der anderen Teilbahn (254 bzw. 252) zur Pendelebene.

8. Pendelwischvorrichtung nach den Ansprüchen 3 und 6, dadurch gekennzeichnet. daß an dem Schwingarm (154) des äußeren Teilarms (132) ein schwenkbarer Taster (245, 247) angelenkt ist, dessen freies Ende in eine nutartig ausgebildeten Schleife (250) der Bahn zum Nutgrund hin federbelastet geführt ist.

9. Pendelwischvorrichtung nach einem der Ansprüche 1 oder 2, dadurch gekennzeichnet, daß die Steuermittel durch gestellfeste, gegeneinanderweisende Anschläge (364, 366) gebildet sind, die nahe den Umkehrlagen mit dem einen Hebelarm (360) eines am inneren Teilarm (330) gelagerten zweiarmigen Hebels (358) zusammenwirken und daß dessen anderer Hebelarm (356) mit seinem Endabschnitt in einer zur Pendelebene geneigten Kulisse (350) geführt ist, die über einen Schwingarm (154) mit dem äußeren Teilarm (132) fest verbunden ist.

10. Pendelwischvorrichtung nach Anspruch 9, dadurch gekennzeichnet, daß die Kulisse (350) zum Drehpunkt des zweiarmigen Hebels (358) hin federbelastet ist.

11. Pendelwischvorrichtung nach einem der Ansprüche 1 bis 10, dadurch gekennzeichnet, daß der äußere Teilarm (132) mit einem Hubgetriebe (172, 170, 174, 175) wirkverbunden ist.

**Revendications**

1. Dispositif d'essuyage pendulaire pour vitres de véhicules automobiles, comprenant un bras d'essuyage allongé, en plusieurs parties, dont le bras partiel intérieur (130), pourvu d'un élément de support pendulaire, forme un guidage (134), du type à douille, pour un bras partiel extérieur, du type à barre, portant une lame d'essuyage et, pendant le fonctionnement du dispositif d'essuyage, ce guidage permet un déplacement longitudinal du bras partiel extérieur (132) par rapport au bras partiel intérieur, des éléments de guidage du bras partiel extérieur, qui coopèrent avec des contre-éléments (145, 146, 620, 350), contraignant le bras partiel (132) à exécuter un mouvement de rotation qui est dérivé du mouvement pendulaire, sur son axe longitudinal, caractérisé en ce que les contre-éléments (140, 141) sont disposés sur un bras oscillant (154), fixé au bras partiel intérieur (130), s'étendant transversalement par rapport à celui-ci, bras oscillant relié rigidement à une colonne de guidage (152) montée oscillante, transversalement à sa longueur, par rapport au bras partiel intérieur (130), d'axe orienté parallèlement à l'axe longitudinal du bras partiel extérieur (132) et disposée à côté de ce dernier et une douille de guidage (150) relié au bras partiel extérieur (132) étant déplaçable sur la colonne de guidage.

2. Dispositif d'essuyage pendulaire selon la revendication 1, caractérisé en ce que les éléments de commande fixés sur le bâti sont formés par une piste inclinée par rapport au plan d'oscillation (140, respectivement 250, respectivement 352), sur laquelle sont guides les contre-éléments reliés de manière fonctionnelle au bras partiel extérieur (132).

3. Dispositif d'essuyage pendulaire selon la revendication 2, caractérisé en ce que les contreéléments prévus pour la piste (40, 140), qui est plane, sont réalisés sous la forme de galets (146, 145).

4. Dispositif d'essuyage pendulaire selon la revendication 3, caractérisé en ce que la piste présente deux surfaces s'étendant séparément, opposées, et en ce qu'un galet (145, 146) servant de contre-élément, chaque fois relié au bras oscillant (154), appuie sur ces surfaces.

5. Dispositif d'essuyage pendulaire selon la revendication 3 ou 4, caractérisé en ce que le galet (146) est sollicité élastiquement par rapport à la piste (140).

6. Dispositif d'essuyage pendulaire selon la revendication 2 ou 3, caractérisé en ce que la piste est une boucle (250) se composant de deux pistes partielles (352, 254), les deux pistes partielles étant réunies dans leurs deux zones d'extrémité, à la manière d'un aiguillage (255, 257).

7. Dispositif d'essuyage pendulaire selon la revendication 6, caractérisé en ce que l'inclinaison d'une des pistes partielles (252, 254) par rapport au plan d'oscillation est différente de l'inclinaison de l'autre piste partielle (254, 252) par rapport au plan pendulaire.

8. Dispositif d'essuyage pendulaire selon les revendications 3 et 4, caractérisé en ce que, sur le bras oscillant (154) du bras partiel extérieur (132), est articulé un palpeur pivotant (245, 247) dont l'extrémité libre est guidée dans une boucle (250), en forme de gorge, de la piste, en étant sollicitée élastiquement par rapport au fond de la gorge.

9. Dispositif d'essuyage pendulaire selon l'une des revendications 1 ou 2, caractérisé en ce que les moyens de commande sont formés par des butées (364, 366) fixées sur le bâti, tournées l'une vers l'autre, qui coopèrent à proximité des positions d'inversion avec l'un des bras de levier (360) d'un levier à deux bras (358) monté sur le bras partiel intérieur (330) et en ce que son autre bras de levier (356) est guidé par sa partie d'extrémité dans une coulisse (350), inclinée par rapport au plan pendulaire, qui est reliée rigidement au bras partiel extérieur (132) par un bras oscillant (154).

10. Dispositif d'essuyage pendulaire selon la revendication 9, caractérisé en ce que la coulisse (350) est sollicitée élastiquement par rapport au point de rotation du levier à deux bras (358).

11. Dispositif d'essuyage pendulaire selon l'une des revendications 1 à 10, caractérisé en ce que le bras partiel extérieur (132) est relié fonctionnellement à une transmission de levage (172, 170, 174, 175).

**Claims**

1. Oscillating wiper device for motor vehicle screens, having an elongated multi-element wiper arm, of which the internal part-arm (130), provided with an oscillating support element, forms a bush-like guide (134) for a bar-like external part-arm holding a wiper blade, and the said guide allowing during the operation of the wiper device a longitudinal displacement of the external part-arm (132) in relation to the internal part-arm (130), control elements of the external part-arm interacting with counter elements (145, 146 or 350) to confer on the external part-arm (132) a rotary movement about its longitudinal axis, derived from the oscillating movement, characterized in that the counter elements (140, 141) are arranged on a swing arm (154), which is fastened on the internal part-arm (130), extends transversely to the latter and is firmly connected to a guide column (152) mounted so as to be able to oscillate transversely to its longitudinal extent, with respect to the internal part-arm (130), aligned axially parallel to the longitudinal axis of the external part-arm (132) and arranged next to the latter, and a guide bush (150) connected to the external part-arm (132) is displaceable on the guide column.

2. Oscillating wiper device according to Claim 1, characterized in that the fixed control elements are formed by a track (140 or 250 or 352), inclined with respect to the oscillating plane, on which track the counter elements effectively connected to the external part-arm (132) are guided.

3. Oscillating wiper device according to Claim 2, characterized in that the counter elements for the two-dimensionally formed track (40 or 140) are designed as a roller (146 and 145 respectively).

4. Oscillating wiper device according to Claim 3, characterized in that the track has two surfaces, running at a distance from each other and facing away from each other, and in that a roller (145, 146) connected to the swing arm (154) bears in each case against the said surfaces as counter element.

5. Oscillating wiper device according to one of Claims 3 or 4, characterized in that the roller (146) is spring-loaded with respect to the track (140).

6. Oscillating wiper device according to one of Claims 2 or 3, characterized in that the track is a slideway (250), consisting of two part-tracks (352, 254), the two part-tracks being brought together in their two end regions in the manner of a switch (255, 257).

7. Oscillating wiper device according to Claim 6, characterized in that the inclination of the one part-track (252 or 254) with respect to the oscillating plane is different from the inclination of the other part-track (254 or 252) with respect to the oscillating plane.

8. Oscillating wiper device according to Claims 3 and 6, characterized in that a pivotal feeler (245, 247) is articulated on the swing arm (154) of the external part-arm (132), the free end of which feeler is guided into a groove-like slideway (250) of the track spring-loaded towards the base of the groove.

9. Oscillating wiper device according to one of Claims 1 or 2, characterized in that the control means are formed by fixed, mutually facing stops (364, 366), which interact close to the return positions with the one lever arm (360) of a two-armed lever (358) supported on the internal part-arm (330) and in that its other lever arm (356) is guided with its end section in a slotted link (350), which is inclined with respect to the oscillating plane and firmly connected to the external part-arm (132) via a swing arm (154).

10. Oscillating wiper device according to Claim 9, characterized in that the slotted link (350) is spring-loaded towards the pivot point of the two-armed lever (358).

11. Oscillating wiper device according to one of Claims 1 to 10, characterized in that the external part-arm (132) is effectively connected to a lifting gear (172, 170, 174, 175).

FIG.1

FIG.2

EP 0 330 663 B1

22

134

FIG.3

162

132

116

133

141

140

175

134 160

154

IV

136 138

IV

132

150

177 174

146

136

144

170 138 172

130

152

156

158

154 164 116

160 166

175 134 132 152

174 150

133 144 155

146

172 170 138 136 140 141 FIG.4

137 139 143

155 164 FIG.5

150

152 146

180

184 182 145

FIG.6

FIG.7

EP 0 330 663 B1

FIG.9

FIG.8

FIG.10

FIG.11